# EUROPÄISCHE PATENTANMELDUNG

(11) **EP 1 662 649 A2**
(43) Veröffentlichungstag der Anmeldung: **31.05.2006**
(21) Anmeldenummer: 05024728.7
(22) Anmeldetag: 11.11.2005
(51) Int. Cl.: H02P 6/20

(54) **Verfahren und Vorrichtung zum Steuern des Anlaufens eines Elektromotors**

(30) Priorität: 25.11.2004 DE 102004056852
(71) Anmelder: LuK Lamellen und Kupplungsbau Beteiligungs KG, 77813 Bühl (DE)
(72) Erfinder: Gerhart, Jürgen, 77767 Appenweier (DE)

(57) **Zusammenfassung**

Bei einem Verfahren zum Steuern des Betriebs eines Elektromotors wird einer durch die Abweichung einer Ist-Größe eines von dem Elektromotor gesteuerten Parameters von einer Soll-Größe bestimmten, zum Antrieb des Elektromotors wirksamen Regelgröße bei einer Änderung der Regelgröße kurzzeitig eine Vorsteuergröße überlagert, die den Betrieb des Elektromotors in Richtung einer Verminderung der Abweichung der Ist-Größe von der Soll-Größe unterstützt.

## Beschreibung

Die Erfindung betrifft ein Verfahren und eine Vorrichtung zum Steuern des Anlaufens eines Elektromotors.

Elektromotoren werden beispielsweise zur Ansteuerung und Lageregelung bei Kupplungs- und Getriebeaktoren von Kraftfahrzeugen verwendet. Für einen guten Schaltkomfort ist eine präzise Regelung der Position eines jeweiligen Stellgliedes erforderlich. Bei einer Lageregelung mit Hilfe eines Elektromotors besteht das Problem, dass bei kleinen Regelabweichungen, d. h. Abweichungen zwischen einer Ist-Position eines Stellgliedes und einer Soll-Position nur kleine Stellgrößen, beispielsweise Stellspannungen oder Stellströme, errechnet werden, um den Elektromotor anzusteuern. Insbesondere beim Anfahren des Elektromotors müssen die Massen von dessen beweglichen Teilen und des dahinter liegenden Aktors beschleunigt werden und gleichzeitig die Haftreibung sowie anschließend Gleitreibung überwunden werden. Dazu benötigt der Elektromotor eine bestimmte Kraft bzw. ein bestimmtes Drehmoment. Da die Steuergröße bei kleinen Abweichungen zunächst klein ist und dann über einen eventuellen I-Anteil erhöht werden kann, folgt die Bewegung des Elektromotors bzw. des von ihm angetriebenen beweglichen Bauteils bzw. Stellgliedes einer festgestellten Abweichung zwischen Ist- und Soll-Position nur verzögert.

Der Erfindung liegt die Aufgabe zugrunde, Abhilfe für die vorgenannten Probleme zu schaffen.

Diese Aufgabe wird mit einem Verfahren zum Steuern des Betriebs eines Elektromotors gelöst, bei welchem Verfahren einer durch die Abweichung einer Ist-Größe eines von dem Elektromotor gesteuerten Parameters von einer Soll-Größe bestimmten, zum Antrieb des Elektromotors wirksamen Regelgröße bei einer Änderung der Regelgröße kurzzeitig eine Vorsteuergröße überlagert wird, die den Betrieb des Elektromotors in Richtung einer Verminderung der Abweichung der Ist-Größe von der Soll-Größe unterstützt.

Mit dem erfindungsgemäßen Verfahren wird erreicht, dass der Elektromotor auf Abweichungen zwischen der Ist- und der Soll-Größe eines von ihm gesteuerten Parameters rascher reagiert, so dass eine präzisere Regelung erreicht wird.

Das erfindungsgemäße Verfahren kann derart ausgebildet werden, dass die Vorsteuergröße der Regelgröße nur bei aus dem Stillstand anlaufendem Elektromotor überlagert wird.

Die Amplitude der Vorsteuergröße kann konstant sein.

Alternativ kann die Amplitude der Vorsteuergröße von der Ist-Größe des von dem Elektromotor gesteuerten Parameters abhängen.

Weiter kann die Amplitude der Vorsteuergröße von einer auf den Elektromotor wirkenden mechanischen Last abhängen.

Bei einer Weiterbildung des Verfahrens kann die Amplitude der Vorsteuergröße an die zum Anlaufen des Elektromotors erforderliche Ansteuergröße angepasst werden.

Eine weitere vorteilhafte Möglichkeit, die Länge der Beaufschlagung des Elektromotors mit der Vorsteuergröße zu bestimmen, liegt darin, die Vorsteuergröße zu vermindern, sobald der Elektromotor anläuft.

Des weiteren ist es möglich, die Vorsteuergröße abhängig von einer auf den Elektromotor wirkenden mechanischen Last zu vermindern.

Eine alternative Möglichkeit, die Dauer der Wirksamkeit der Vorsteuergröße zu bestimmen, liegt darin, die Vorsteuergröße mit einer vorbestimmten Zeitfunktion zu vermindern, wobei diese Zeitfunktion von augenblicklichen Betriebsgrößen des Elektromotors abhängen kann.

Besonders vorteilhaft ist das erfindungsgemäße Verfahren einsetzbar in Anwendungen bei denen der von dem Elektromotor getrennte Parameter eine Position eines Bauteils ist.

Eine erfindungsgemäße Vorrichtung zum Steuern des Betriebs eines Elektromotors enthält einen Elektromotor, einen Positionssensor zum Erfassen der Ist-Position eines von einem Elektromotor bewegten Bauteils und eine elektronische Steuereinrichtung mit einem Regler zum Erzeugen einer dem Erzeugen einer dem Elektromotor zugeführten Reglergröße, die von einer Abweichung zwischen einer dem Regler zugeführten Soll-Position und der Ist-Position abhängt, und mit einem Vorsteuergrößengenerator zum Erzeugen einer der Regelgröße überlagerten Steuergröße, welche elektrische Steuereinrichtung entsprechend dem letztgenannten Verfahren arbeitet.

Die Erfindung ist für weitgehend alle denkbaren Einsätze eines Elektromotors anwendbar, beispielsweise für Ansteuerungen eines Elektromotors zur Drehzahl-, Geschwindigkeits-, Beschleunigungsregelung oder auch Stromregelung usw., wobei der Elektromotor dadurch gesteuert werden kann, dass der durch ihn fließende Strom oder die an ihm liegende Spannung, die von ihm abgegebene Kraft oder das von ihm abgegebene Moment zur Regelung verändert wird und gegebenenfalls mit einer Vorsteuergröße beaufschlagt wird.

Die Erfindung wird im Folgenden beispielsweise anhand einer Positionsregelung und mit weiteren Einzelheiten anhand schematischer Zeichnungen erläutert.

In den Figuren stellen dar:
Figur 1 ein Prinzipschaltbild eines in einer Regeleinrichtung enthaltenen Elektromotors,
Figuren 2 und 3 Grafiken zur Erläuterung der Vorteile des erfindungsgemäßen Verfahrens.

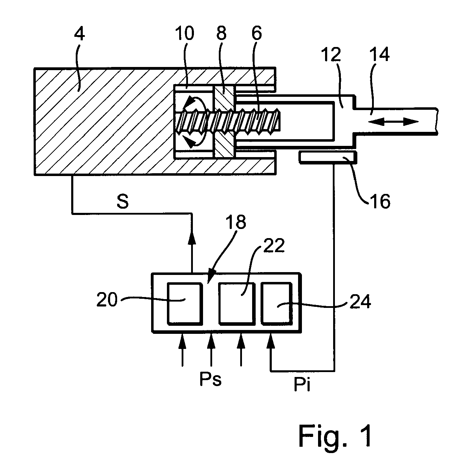

Gemäß Figur 1 weist ein Elektromotor 4 eine mit einem Außengewinde versehene Abtriebswelle 6 auf. Mit dem Außengewinde der Abtriebswelle 6 kämmt ein Innengewinde einer Mutter 8, die unverdrehbar, jedoch längs verschieblich in einem Ansatz 10 des Gehäuses des Elektromotors geführt ist.

Mit der Mutter 8 ist starr ein insgesamt U-förmiges Jochbauteil 12 verbunden, von dem ein Schaft 14 ausgeht, der beispielsweise gelenkig mit einem Betätigungshebel einer nicht dargestellten Kupplung verbunden ist. Der Schaft 14 bzw. der nicht dargestellte Betätigungshebel bildet auf diese Weise ein durch Drehung der Abtriebswelle 6 bewegtes Bauteil.

Die Position des Bauteils 12, 14 wird von einem Positionssensor 16 erfasst, der in an sich bekannter Weise als Absolutsensor oder Inkrementsensor ausgebildet ist, wobei bei Ausbildung als Inkrementsensor durch Anfahren einer Referenzposition, auf die die Zählung dann bezogen wird, die Absolutposition ermittelt werden kann. Der Positionssensor 16 kann an dem bewegten Bauteil 12, 14, an einem von dem bewegten Bauteil betätigten Betätigungsglied, beispielsweise einem Kupplungshebel oder einem Getriebehebel, oder auch an einem Drehbauteil des Elektromotors 4 angeordnet sein, um dessen Drehung vorzugsweise inkremental zu erfassen.

Der Positionssensor 16 ist mit einem Eingang einer elektronischen Steuereinrichtung 18 verbunden, die einen Regler 20, einen Mikroprozessor 22 mit zugehörigen Speichereinrichtungen und einen Vorsteuergrößengenerator 24 enthält. Die Hard- und Softwarefunktionen der beschriebenen Funktionsblöcke können in unterschiedlicher Weise aufgeteilt sein.

Während die Ist-Position pi des bewegten Bauteils 12, 14 von dem Positionssensor 16 ermittelt wird und einem entsprechenden Eingang der Steuereinrichtung 18 zugeführt wird, wird einem anderen Eingang der Steuereinrichtung eine Soll-Position pₛ zugeführt, die von einem weiteren, nicht dargestellten Steuergerät abhängig von Betriebsparametern eines Fahrzeugs errechnet wird, beispielsweise einem augenblicklich eingelegten Gang eines Getriebes, der Fahrzeuggeschwindigkeit, der momentanen Motorleistung und der Stellung eines Fahrpedals.

Bei einer Abweichung zwischen der Ist-Position pᵢ und der Sollposition pₛ erzeugt die elektronische Steuereinrichtung 18 an einem Ausgang eine Steuergröße S = R + VS, wobei R eine vom Regler 20 erzeugte Regelgröße ist, die von der Abweichung zwischen ps und pi abhängt, und VS eine Vorsteuergröße ist, die der Regelgröße R überlagert wird. Die Vorsteuergröße VS wird von dem Vorsteuergrößengenerator 24 erzeugt und dient dazu, das dynamische Ansprechen des Elektromotors 4 auf Änderungen der Regelgröße zu verbessern.

Der Regler 20 kann jedwelchen bekannten Aufbau haben, und als P, 1, oder D Regler oder mit Kombination der P, I, und D Funktionen ausgebildet sein.

Bei kleinen Abweichungen zwischen pₛ und pᵢ ist die vom Regler 20 erzeugte Regelgröße, beispielsweise eine Spannung oder ein Strom, zunächst klein, so dass der Elektromotor 4 mit Verzögerung reagiert, insbesondere wenn der Elektromotor 4 aus dem Stillstand anläuft und dabei Trägheitsmomente und Haftreibungen überwunden und Massen beschleunigt werden müssen. Aber auch, wenn der Elektromotor 4 beispielsweise mit konstanter Drehzahl dreht, um die Stellung eines Betätigungsgliedes nachzustellen, reagiert er auf Änderungen der Regelgröße verzögert, da Drehzahländerungen mit Beschleunigungen oder Verzögerungen verbunden sind.

Erfindungsgemäß wird der Regelgröße 20 daher die Vorsteuergröße VS derart zuaddiert, dass der Elektromotor einer Änderung der Regelgröße rascher folgt, d. h. die Vorsteuergröße führt zu einer kurzzeitigen Überhöhung der Regelgröße bzw. von deren Änderung. Für die Festlegung der Höhe bzw. Amplitude der Vorsteuergröße, beispielsweise Vorsteuerspannung, gibt es beispielsweise folgende Möglichkeiten:
- Sobald eine Änderung der Abweichung zwischen pₛ und pᵢ eintritt, die zu einer Änderung der vom Regler 20 erzeugten Regelgröße führt, erzeugt der Vorsteuergrößengenerator 24 eine Vorsteuergröße mit fest vorgegebener Amplitude, beispielsweise der maximal zulässigen Anfahrspannung oder dem maximal zulässigen Anfahrstrom des Elektromotors 4.
- Alternativ kann die Vorsteuergröße einem in der Steuereinrichtung 18 abgelegten Kennfeld bzw. einer Kennlinie entnommen werden, in dem die Vorsteuergröße abhängig von der jeweiligen Ist-Position pᵢ und/oder der jeweiligen Soll-Position ps abgelegt ist. Die jeweilige Amplitude der Vorsteuergröße kann z. B. empirisch in Ansteuerversuchen mit kompletter Aktorik und Last ermittelt werden.
- Eine weitere Möglichkeit zur Festlegung der Höhe der Vorsteuergröße besteht darin, die Vorsteuergröße in Abhängigkeit von der Last zu ermitteln, die auf das vom Elektromotor bewegte Betätigungsglied von der betätigten Einrichtung aus wirkt. Diese Last bzw. Kraft hängt beispielsweise bei einer Kupplung von der jeweiligen Stellung des Kupplungshebels ab. Entsprechend ändern sich mit der Stellung des Betätigungsgliedes die Haft- und Gleitreibungsverhältnisse, so dass es zweckmäßig ist, die Vorsteuergröße abhängig von der Last einzustellen. Die Last kann einer Lastkennlinie entnommen werden oder unmittelbar gemessen werden.

Weiter ist es möglich, die Steuergröße S zu ermitteln, die bei unterschiedlichen Ist-Positionen pi des bewegten Bauteils 12, 14 zum Anlaufen des Motors erforderlich ist und die Vorsteuergröße an diese Losbrechgröße (Spannung oder Strom) anzupassen.

Beispielsweise kann bei einer in Betriebnahme der Vorrichtung gemäß Fig. 1 die Spannung an verschiedenen Positionen pᵢ kontinuierlich erhöht werden und dann die Spannung, bei der sich der Motor zu drehen beginnt, gespeichert werden. Damit kann ein Kennfeld für die Vorsteuergröße erzeugt werden. Es kann auch sinnvoll sein, zusätzlich einen Offset auf die jeweiligen Vorsteuergrößen zu addieren oder die jeweils ermittelten Vorsteuergrößen (Losbrechgrößen) mit einem Faktor zu versehen. Die Vorsteuergröße kann in besonderen Situationen, in denen der Elektromotor aus dem Stillstand heraus anlaufen kann, adaptiert werden.

Neben der Höhe bzw. Amplitude der Vorsteuergröße ist die Festlegung von deren zeitlichem Verlauf für die Regelgüte wichtig. Zur Festlegung des zeitlichen Verlaufes der Vorsteuergröße gibt es beispielsweise folgende Möglichkeiten:
- Sobald nach einem Anfahren des Elektromotors 4 eine über einem Schwellwert liegende Motordrehzahl oder eine über einem Schwellwert liegende Geschwindigkeit des bewegten Bauteils festgestellt wird, wird die Vorsteuergröße vermindert.
- Die Verminderung kann direkt auf Null abnehmen. Sie kann jedoch auch in Abhängigkeit von dem vom Elektromotor 4 aufzubringenden Drehmoment zur Überwindung der von dem bewegten Bauteil 12, 14 her wirkenden mechanischen Kraft bzw. Last erfolgen, um gleichzeitig eine Lastkompensation zu erreichen und dadurch die Regelgüte zu verbessern. Bei Kenntnis der Lastkennlinie kann die Verminderung der Vorsteuergröße abhängig von pᵢ erfolgen.
- Die Vorsteuergröße kann mit vorbestimmter Zeitfunktion, abhängig beispielsweise von der Massenträgheit des Systems, abnehmen, beispielsweise kann die Vorsteuergröße jeweils innerhalb von 10 ms auf 0 zurückgenommen werden, wobei der Verlauf der Rücknahme abhängig von einer Lastkennlinie und/oder von pᵢ gestaltet werden kann. Die Zeit, in der die Vorsteuergröße wirkt, ist in erster Linie von der Trägheit des Systems abhängig und kann bei höherer Trägheit vergrößert werden.
- Die Vorsteuergröße kann in Abhängigkeit von der Drehzahländerung des Elektromotors erfolgen; beispielsweise wird bei einer zunächst nur geringen Drehzahländerung die Vorsteuergröße nur wenig vermindert, während sie bei einer anschließend größeren Drehzahländerung stärker vermindert wird.

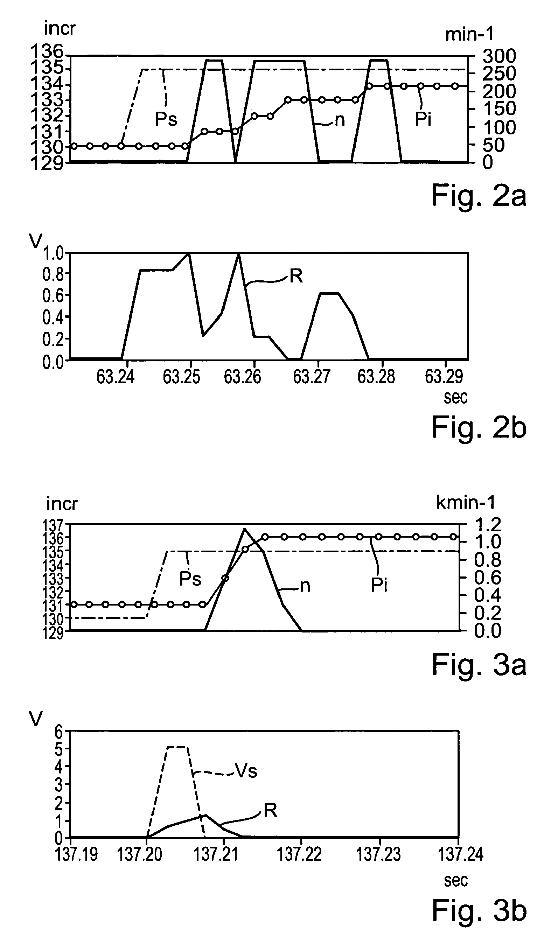

Im Folgenden wird das geschilderte Verfahren anhand der Figuren 2 und 3 beispielhaft erläutert.

In Figur 2 zeigt die Darstellung a) drei Kurven, wobei die strichpunktierte Kurve den Verlauf der Soll-Position pₛ über die Zeit darstellt, die mit Kreisen gekennzeichnete Kurve Ist-Position pᵢ darstellt und die durchgezogene Kurve die Drehzahl (n) des Elektromotors 4 darstellt (rechts in der Figur in min-1 angegeben).

Der Figurenteil b) stellt den Verlauf der Regelspannung R in gleicher zeitlicher Abhängigkeit wie im Figurenteil a) dar. Eine Vorsteuerung ist in der Ausführungsform gemäß Figur 2 nicht vorgesehen. Wie ersichtlich wird, offensichtlich aufgrund der sehr groben Auflösung der Drehzahl des Elektromotors 4 (Fig. 1), die Regelspannung wiederholt zurückgenommen, wodurch ein sehr stufiges Regelverhalten erzielt wird und für die auf eine Änderung der Soll-Position pₛ erfolgende Änderung der Ist-Position pᵢ eine Zeitdauer von insgesamt etwa 35 ms benötigt wird.

Figur 3 zeigt die Verhältnisse mit zusätzlicher Vorsteuerung, wobei im Figurenteil b) die aus Vorsteuerspannung mit VS und die Regelspannung mit R bezeichnet sind. Wie ersichtlich wird bei einer Änderung der Soll-Position pₛ bzw. bei einer Änderung der Regelspannung R eine rasch auf einen vorbestimmten, von Betriebsparametern, wie z. B. der auf den Elektromotor wirkenden Last abhängige Wert zunehmende Vorsteuerspannung erzeugt, die nach einer vorbestimmten, ebenfalls von Betriebsparametern abhängigen Wert abnimmt. Die Regelspannung R kann dadurch gegenüber der Fig. 1 erheblich kleiner sein. Die Ist-Positionsänderung erfolgt in einem Zug und es wird lediglich eine Zeitdauer von etwa 12,5 ms benötigt. Die Vorsteuerung beträgt im dargestellten Beispiel etwa 5V und liegt für eine Zeitdauer von etwa 7,5 ms an. Wie ersichtlich, ist das Regelverhalten erheblich besser und dreht der Elektromotor kurzeitig auf eine wesentlich höhere Spitzendrehzahl.

Die bleibenden bzw. nicht ausgeregelten Abweichungen zwischen der Ist-Position pᵢ und der Soll-Position pₛ in den Figuren 2 und 3 sind durch eine Abschalthysterese in einer jeweiligen Lageregelung bedingt. Der Regler wird abgeschaltet, wenn die Regelabweichung einen bestimmten Wert, beispielsweise zwei Inkremente eines Inkrementzählers, unterschreitet. Die in den Figuren auftretenden Zeitverzögerungen zwischen dem Drehzahlsignal und der Änderung der Ist-Position pᵢ haben Ihre Ursache in einer Filterung bei der Drehzahlberechnung. Die sprunghaften Änderungen des Drehzahlsignals insbesondere in Fig. 2 ist durch eine Inkrementalwegmessung und die daraus ermittelte Drehzahl bedingt. Der Verlauf der Regelspannung hängt stark von dem Drehzahlsignal ab.

Es versteht sich, dass das erfindungsgemäße Verfahren auch bei einem Elektromotor angewendet werden kann, der als einfacher Elektromagnet mit kontinuierlich veränderbaren Hub ausgebildet ist, also kein drehendes Bauteil enthält.

Wie sich aus dem Vorstehenden weiter ergibt, besteht ein wesentlicher Aspekt der Erfindung darin, zusätzlich zu dem Regler 20 einen Vorsteuergrößengenerator 24 zu verwenden, dessen Betrieb durch eine Änderung der Soll-Position pₛ und/oder der vom Regler 20 erzeugten Regelgröße bzw. eine Änderung der Drehzahl des Elektromotors getriggert wird und dessen Betrieb dann beispielsweise weitgehend autark von dem des Reglers 20 abläuft. Es versteht sich, dass der Vorsteuergrößengenerator 24, der eine funktional vom Regler 20 weitgehend getrennte Einheit bildet, hardware- und softwaremäßig mit dem Regler 20 zusammengefasst sein kann.

Mit der erfindungsgemäßen Vorsteuerung können positionsabhängige Gegebenheiten, wie Last und Reibung, gezielt berücksichtigt werden. Dies ist mit einem D-Regler nicht ohne weiteres möglich, da aufgrund der unbekannten Last ein 1-Anteil für eine stationäre Genauigkeit erforderlich ist. Des weiteren werden D-Regler insbesondere Kupplungs- und Getriebeaktoren in erster Linie zur Dämpfung beim Einregeln einer Ist-Position verwendet. Der D-Anteil des Reglers kann beispielsweise statt auf die Änderung der Regeldifferenz zu reagieren, nur auf die Änderung der Motordrehzahl oder den Gradienten der Ist-Position ansprechen.

### Bezugszeichenliste

- 4: Elektromotor
- 6: Antriebswelle
- 8: Mutter
- 10: Ansatz
- 12: Jochbauteil
- 14: Schaft
- 16: Positionssensor
- 18: elektronische Steuereinrichtung
- 20: Regler
- 22: Mikroprozessor
- 24: Vorsteuergrößengenerator

## Patentansprüche

1. Verfahren zum Steuern des Betriebs eines Elektromotors (4), bei welchem Verfahren einer durch die Abweichung einer Ist-Größe eines von dem Elektromotor gesteuerten Parameters von einer Soll-Größe bestimmten, zum Antrieb des Elektromotors wirksamen Regelgröße bei einer Änderung der Regelgröße kurzzeitig eine Vorsteuergröße überlagert wird, die den Betrieb des Elektromotors in Richtung einer Verminderung der Abweichung der Ist-Größe von der Soll-Größe unterstützt.

2. Verfahren nach Anspruch 1, wobei die Vorsteuergröße der Regelgröße nur bei aus dem Stillstand anlaufenden Elektromotor (4) überlagert wird.

3. Verfahren nach Anspruch 1 oder 2, wobei die Amplitude der Vorsteuergröße konstant ist.

4. Verfahren nach Anspruch 1 oder 2, wobei die Amplitude der Vorsteuergröße von der Ist-Größe des von dem Elektromotor (4) gesteuerten Parameters abhängt.

5. Verfahren nach Anspruch 1 oder 2, wobei die Amplitude der Vorsteuergröße von einer auf den Elektromotor (4) wirkenden mechanischen Last abhängt.

6. Verfahren nach Anspruch 1 oder 2, wobei die Amplitude der Vorsteuergröße an die zum Anlaufen des Elektromotors (4) erforderliche Ansteuergröße angepasst wird.

7. Verfahren nach Anspruch 2, wobei die Vorsteuergröße vermindert wird, sobald der Elektromotor anläuft.

8. Verfahren nach einem der Ansprüche 1 bis 7, wobei die Vorsteuergröße abhängig von einer auf den Elektromotor (4) mechanischen Last vermindert wird.

9. Verfahren nach einem der Ansprüche 1 bis 8, wobei die Vorsteuergröße mit einer vorbestimmten Zeitfunktion vermindert wird.

10. Verfahren nach Anspruch 9, wobei die Zeitfunktion von augenblicklichen Betriebsgrößen des Elektromotors abhängt.

11. Verfahren nach einem der Ansprüche 1 bis 10, wobei der von dem Elektromotor gesteuerte Parameter eine Position eines Bauteils (12, 14) ist.

12. Vorrichtung zum Steuern des Betriebs eines Elektromotors, enthaltend einen Elektromotor (4), einen Positionssensor (16) zum Erfassen der Ist-Position eines von dem Elektromotor bewegten Bauteils (12, 14), und eine elektronische Steuereinrichtung (18) mit einem Regler (20) zum Erzeugen einer dem Elektromotor zugeführten Regelgröße, die von einer Abweichung zwischen einer dem Regler zugeführten Soll-Position und der Ist-Position abhängt, und mit einem Vorsteuergrößengenerator (24) zum Erzeugen einer der Regelgröße überlagerten Steuergröße, welche elektrische Steuereinrichtung entsprechend dem Verfahren nach einem der Ansprüche 1 bis 11 arbeitet.
